# EUROPEAN PATENT APPLICATION

(11) **EP 2 043 345 A1**
(43) Date of publication of application: **01.04.2009**
(21) Application number: 07291141.5
(22) Date of filing: 26.09.2007
(51) Int. Cl.: H04M 3/523, H04M 3/51

(54) **Method of supporting a routing of communcations**

(71) Applicant: Alcatel Lucent, 75008 Paris (FR)
(72) Inventor: Coulon, Stéphane, 95810 Arronville (FR); Rey, Jean-Francois, 29200 Brest (FR); Litteaut, Jacques, 78160 Marly le Roi (FR)
(74) Representative: Zinsinger, Norbert

(57) **Abstract**

The invention concerns a method of supporting a routing of communications among two or more nodes (1 to 4) of a telecommunications network (100), and a network unit (5) to execute said method. The routing of the communications (601 to 604) is governed by routing-related administrative information defined for one or more of the nodes (1 to 4). Said routing-related administrative information provided from the one or more nodes (1 to 4) is collected. Notifications based on said collected routing-related administrative information are generated. Said notifications are sent to one or more applications for informing said applications about the routing of the communications (601 to 604).

## Description

The present invention relates to a method of supporting a routing of communications among two or more nodes of a telecommunications network, and a network unit to execute said method.

Enterprises require more and more flexibility from their IT infrastructures to achieve the best efficiency in their business processes (IT = Information Technology). Communication is a key element there, and inside communication, routing and filtering functions are the pivots of this efficiency.

Today, many people participate in the global programming of the routing/filtering/screening functions inside an enterprise: at personal level (forwarding calls, ...), or at enterprise level (routing/filtering/screening rules), be it in the general context of the enterprise itself, or in the context of a specific function of the enterprise, like an informal call centre for example. The global call distribution within an enterprise may then result from a combination of distributed decisions, which may not have been synchronised. People receiving calls in this context may have no immediate clue on why this call ended at their device and what is the associated subject of the call.

People may rely only on the efficiency of the enterprise organisation, and the (formal or informal) communication inside this organisation to learn that they may be involved directly, or indirectly, in a communication oriented business process. This is in no way enforced by the communication infrastructure that will realise these communications.

US 6 167 395 describes a multimedia call centre (= MMCC) supporting multiple channels and forms of communication and storing call centre transactions in a data repository, a threading software application that has a programming input for a user to enter association criteria, an access function that accesses at least stored data in the data repository, a search function that searches accessed data for association criteria, and notes those data entities that meet the association criteria; and a display function that displays at least indicators of data entities meeting the association criteria. The threading application serves as a research tool for mining data repositories of the call centre for information pertinent to business goals of the enterprise hosting the call centre. In some embodiments the application is capable of associating transactions occurring real time as well as stored data. US 6 167 395 describes an application which allows to search information linked to calls in the MMCC. This information may be routing rules. The routing of calls may be based on the search results.

US 6 185 291 describes a personal telephone call router adapted to execute on a personal computer (= PC) connected to a local area network (= LAN) wherein the LAN is also connected to a computerised telephony switching system. The personal telephone call router has a user interface allowing an individual user to customise routing rules for incoming calls. The interface in a preferred embodiment is a window displayable on a computer screen of the PC, allowing the user to review and edit personal routing rules in a high-level language. Data, such as caller ID and the like, associated with incoming calls received at the computerised telephony switching system is broadcast on the LAN prior to routing the incoming calls, and the broadcast data is utilised by individual editions of the personal telephone call router to prepare and send routing instructions on the LAN to the computerised switching system to route the incoming calls. US 6 185 291 describes a system which allows a user to configure call routing rules.

US 6 201 863 describes a personal telephone call router adapted to execute on a PC connected to a LAN wherein the LAN is also connected to a computerised telephony switching system. The personal telephone call router has a graphic user interface allowing an individual user to route incoming calls from his/her PC by drag-and-drop techniques. In some embodiments the user may also customise routing rules for incoming calls. In preferred embodiments incoming calls are directed in the telephony switch to a virtual routing destination. In some cases each individual user is associated with a specific virtual destination, and in others data associated with each call is broadcast on the LAN to be filtered at each PC on the LAN running a personal router according to an embodiment of the invention. US 6 201 863 describes a routing mechanism which sends incoming calls either to dedicated agents or to a user group who can configure the routing rules.

US 6 148 074 describes a client-server telephone call router system as part of a customer premises system. The client-server telephone call router system has a client-server router adapted to execute on a telephony switch, such as a public branch exchange (= PBX) or other telephony switch, or on a processor connected by CTI link to a telephony switch (CTI = Computer Telephony Integration). The telephony switch or processor executing the router is connected to a LAN that also interconnects computer workstations proximate to telephones connected to the telephony switch. Client user interface applications run on the computer workstations, allowing clients to edit routing rules for the router, which has a list of routing rules keyed to users and workstations of the customer premises system. The editing rules are kept by the router in portions dedicated to individual users. With this system a user can edit at a workstation on the LAN his/her own routing rules, and transmit the edits to the client-server router where the rules will be followed to route calls for that user and protocol. US 6 148 074 describes how to implement a logic routing with intervention of agents who may take the call in real-time.

It is the object of the present invention to provide an improved routing of communications.

The object of the present invention is achieved by a method of supporting a routing of communications among two or more nodes of a telecommunications network, the routing of the communications governed by routing-related administrative information defined for one or more of the nodes, whereby the method comprises the steps of collecting said routing-related administrative information provided from the one or more nodes, generating notifications based on said collected routing-related administrative information, and sending said notifications to one or more applications for informing said applications about the routing of the communications. Moreover, the object of the present invention is achieved by a network unit for supporting a routing of communications among two or more nodes of a telecommunications network, the routing of the communications governed by routing-related administrative information defined for one or more of the nodes, whereby the network unit comprises a control unit adapted to collect said routing-related administrative information provided from the one or more nodes, generate notifications based on said collected routing-related administrative information, and send said notifications to one or more applications for informing said applications about the routing of the communications.

The invention provides a solution to the problem that people receiving a call in a routing context may have no immediate clue on why this call ended at their device and what is the associated subject of the call. The proposed invention addresses this general problem, allowing humans and/or applications to anticipate the situation of receiving a communication because of routing rules, thus optimising the global enterprise efficiency.

The informal business processes underlying the communication routing within an enterprise are turned into a more formal tool that is appropriate to gain efficiency within organisations. The invention may also be integrated into business applications.

Business process optimisation is the new promise that is made by the IT industry to enterprises in general. Optimising business processes will require in particular that end users are aware of them, and that errors or inaccuracy are detected and reported as soon as possible. The invention provides a feedback function with respect to the routing of communications.

The invention makes provisions to adapt to various systems, either to collect the necessary information or to generate notifications toward applications. This provisions are made using standard software design rules and technologies.

Further advantages are achieved by the embodiments of the invention indicated by the dependent claims.

An application may be an application used by a user and associated with a user, respectively, or an automated application without an associated user. For example, a user-associated application may be a communications device (e.g., a telephone) or a software (e.g., a browser) running on a communications device (e.g., a PC). For example, a user-independent application may be a function implemented in the network and acting independently of a user, e.g., a smart function capable to decide whether a routing plan is suitable for a user or a terminal.

According to a preferred embodiment of the invention, a feedback function is provided for receiving input from the applications which have received the notifications. The feedback function allows the applications to give feedback on the routing of communications to the telecommunications network, as described in the notifications. When a feedback message has been received from an application, the feedback function uses the feedback message to generate a notification which is sent to an authority of the telecommunications network. The authority of the telecommunications network is authorised to administer and adjust the routing policy of the telecommunications network. The authority may access any node and change the routing-related administrative information, e.g., a routing policy and/or routing priority rules, stored in the node. Generally, the authority of the telecommunications network may be any entity or person with administrative rights on the telecommunications network. For example, the authority of the telecommunications network is a department executive, or their assistant, who defines a routing policy for the department. For changing the routing-related administrative information, the authority may require the help of a telecommunications administrator.

According to another preferred embodiment of the invention, the feedback function provides the application with a selection procedure after one of the applications has received a notification. The selection procedure requests the application to accept or reject the routing of the communications or to request more information before deciding. If the application accepts the routing of the communications in said selection procedure, the feedback function maintains the routing of the communications. If the application rejects the routing of the communications in said selection procedure, the feedback function triggers a re-assessment of the routing, e.g., by an authority of the telecommunications network.

According to another preferred embodiment of the invention, the control unit of the network unit identifies the one or more nodes which are involved in the routing of the communications if the network unit receives a rejection of the routing of the communications in the selection procedure from the application. Then, the network unit sends a rejection notification to one or more of the identified nodes whereby the rejection notification informs the one or more of the identified nodes about the rejection by the application.

In a preferred embodiment, the network unit provides a user of the application with a possibility to specify a reason for rejecting the routing of the communications. The network unit integrates the specified reason given by the user into said rejection notification that is sent to the one or more of the identified nodes to inform them about the rejection by the application, and about the reason of the rejection.

According to another preferred embodiment of the invention, the network unit connects to administrative Application Programming Interfaces (= API's) of the one or more nodes associated with routing-related administrative information governing the routing of the communications. The network unit subscribes to routing-related administrative information exchanged among the one or more nodes, i.e., the network unit initiates that it receives information, preferably a copy, of routing-related administrative information handled by the one or more nodes. Whenever one of the one or more nodes handles routing-related administrative information, the network unit receives said information.

Preferably, the network unit analyses said collected routing-related administrative information and pre-defined routing priority rules associated with the collected routing-related administrative information. The pre-defined routing priority rules may be stored in the one or more nodes that provide the routing-related administrative information and transmitted from these nodes to the network unit. It is also possible that the pre-defined routing priority rules are stored in a central network entity and transmitted from this central network entity to the network unit. Based on said analysis, the network unit combines said collected routing-related administrative information and said priority rules into a global routing plan. Global means that the routing plan comprehends at least a significant part or all of the telecommunications network. The notifications which are generated by the network unit may comprise said global routing plan or at least elements associated with said global routing plan.

It is possible that not all notifications are of interest for a specific application. Preferably, the network unit provides one or more applications with an option to subscribe to notifications which belong to specific notification categories. Then, the network unit sends only those notifications to the one or more applications for which the respective applications have subscribed to.

In another preferred embodiment, the network unit sends together with said notifications additional information related to a business context of the communications, such as a business project related to the communications or a user skill expected from a user receiving the communications, etc.

These as well as further features and advantages of the invention will be better appreciated by reading the following detailed description of presently preferred exemplary embodiments taken in conjunction with accompanying drawings of which:
- Fig. 1: is a block diagram of a telephone network according to an embodiment of the invention; and
- Fig. 2: is a message flow diagram according to an embodiment of the invention.

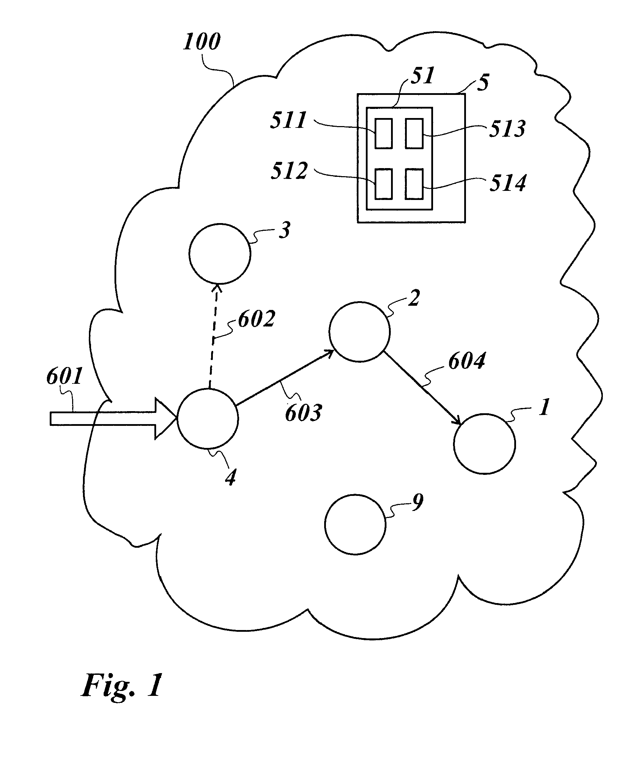

Fig. 1 shows a telecommunications network 100, e.g., a telephone network such as a PABX or an electronic mail distribution system, operated on the premises of an enterprise (PABX = Private Automatic Branch Exchange). The telecommunications network 100 is administrated by a network authority 9, usually a person who has access to all network entities (public ones like routers and private ones like telephone or PC terminals) of the telecommunications network 100 (PC = Personal Computer) and who is entitled to change any settings of the telecommunications network 100.

The telecommunications network 100 comprises network nodes 1 to 4. A node is a device that is connected as part of the telecommunication network. For the purpose of this description, a network node is considered synonymous with a network element, and is usually at a single site. Every node has an address, e.g., a MAC address or a telephone number, so that a message can be sent to the node (MAC = Media Access Control). For example, a node may be a Personal Computer, a PDA (= Personal Digital Assistant), a telephone, a router, a switch, a communication server, or a hub. In Fig. 1, the nodes 1 to 4 are represented by telephone terminals that are connected to each other.

For each of the nodes 1 to 4, respective routing-related administrative information may be defined. The routing-related administrative information associated with a single network node 1 to 4 defines a local routing policy with regard to messages that arrive at the network node 1 to 4. The respective routing policies may be defined by users of the network nodes 1 to 4 and/or by the authority 9. The defined respective routing policies are then translated into routing-related administrative information and routing-related administrative data, respectively, and deposited with the respective network node 1 to 4. Preferably, each of the network nodes 1 to 4 comprises a memory where the routing-related administrative information is stored to be consulted in the case that a message arriving at the network node 1 to 4 must be routed by the network node 1 to 4.

A first user is subscribed to the communication service provided in the telecommunications network 100. The first user may use the network node 1, here a telephone terminal. For example, the first user is an office worker in an enterprise. The telephone calls that finally arrive at the node 1 may have been routed there by various sources. The routing policy that results in a call being routed to the network node 1 may come from different sources: the user's own routing policy, the colleagues', the boss', the contact centre's routing policy, etc. The result of these policies, i.e., call being routed to the first user, may not accommodate the first user.

For instance, the routing policy in the enterprise telecommunication network 100 is that all foreign customers' calls 601 arriving at the central reception node 4 are automatically routed 602 to the 3 node, associated with a foreign language correspondence clerk. The boss of the enterprise instructs the authority 9 to define this routing policy by adjusting the routing-related administrative information at the network node 4. Each telephone call arriving a the node 4 is checked for the telephone number of the caller. Depending on the telephone number, the calls are routed to different nodes 1 to 4.

Currently, the foreign language correspondence clerk is on holidays, so the boss has instructed the authority to implement a different routing plan for the time the foreign language correspondence clerk is out of office. According to the changed routing plan, foreign customers' calls 601 are routed 603 as substitute to a second user associated with the network node 2, because the second user is good at languages. Unfortunately, the second user will be out of office next Tuesday and has set on Monday evening, as a matter of routine and having forgotten the fact that the first user does not even speak English, an automatic call forwarding 604 to the first user associated with the network node 1.

Furthermore, the telecommunications network 100 comprises a network unit 5 according to the present invention.

The network unit 5 is composed of one or several interlinked computers, i.e., a hardware platform, a software platform basing on the hardware platform and several application programs executed by the system platform formed by the software and hardware platform. The functionalities of the network unit 5 are provided by the execution of these application programs. The application programs or a selected part of these application programs constitute a computer software product providing a communication support service as described in the following, when executed on the system platform. Further, such computer software product is constituted by a storage medium storing these application programs or said selected part of application programs.

The network unit 5 may be a stand-alone unit or alternatively be integrated into one of the existing network nodes 1 to 4. The network unit 5 comprises a control unit 51 with a dedicated function which will first subscribe to routing-related administrative information provided by the network nodes 1 to 4, and then build and generate notifications based on these information toward applications, in order to inform users of the applications or the applications of a routing plan established by the routing-related administrative information. A simple acknowledge/deny mechanism will be also provided, allowing users or applications to give a feedback to the telecommunications network 100. This feedback will be turned into a notification towards the authority 9 of the telecommunication network 100.

The dedicated function of the control unit 51 is built of the following subfunctions:
a) An acquisition function 511, which connects to administrative APIs (= Application Programming Interface) of the network nodes 1 to 4 to collect, if possible in real time, information about active routing and filtering rules. A plug-in mechanism is used to adapt to various systems.
b) A compiler function 512, which uses the previously acquired data, and various rules describing priorities to combine these data into a global instant routing plan.
c) A dispatcher function 513 to send notifications toward applications. This dispatcher allows applications to subscribe to these notifications, using dedicated filters allowing the applications to describe the notifications in which the applications are interested. If available, notifications will convey additional information related to the business context of the expected calls, like: a related business project, or expected user skill, or a URI of a document or set of documents related to the project/call, ... etc. (URI = Uniform Resource Identifier). These additional information may be optional information that the network nodes 1 to 4 may provide.
d) A feedback function 514, that acts as a front end to an external notification system, allowing end users to send alerts regarding the routing plan. These alerts are designed to convey the end user feedback about the global routing plan: acknowledgement, denying the routing plan, requiring more information, etc.

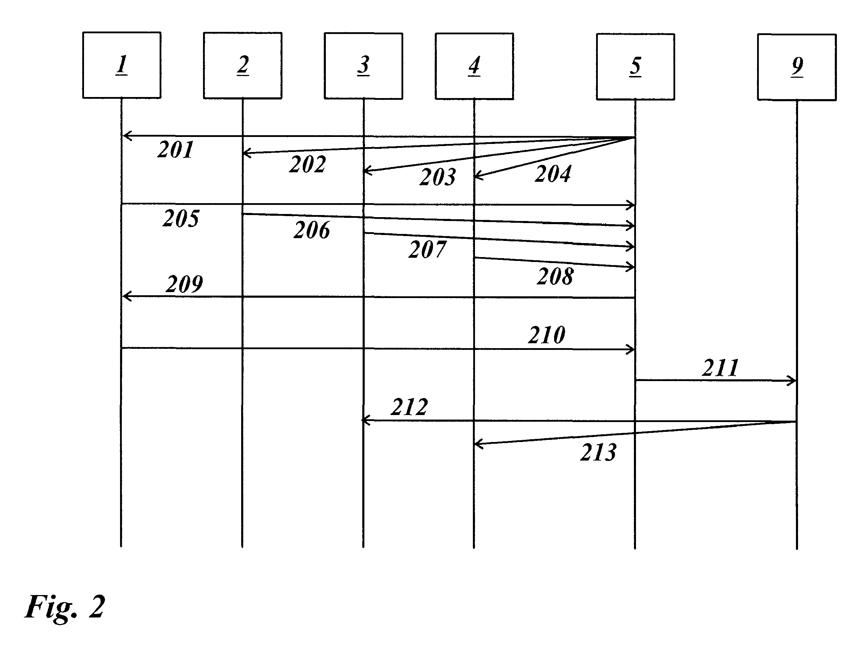

Fig. 2 shows a message flow diagram according to the embodiment of the invention described with regard to Fig. 1. The message flow diagram comprises the first user associated with the network node 1, the second user associated with the network node 2, the network nodes 3 and 4, the network unit 5, and the network authority 9.

To start, the network unit 5 of the network unit 5 connects to administrative APIs of the network nodes 1 to 4 and sends by means of the acquisition function 511 subscription messages 201 to 204 to the network nodes 1 to 4. The acquisition function 511 collects routing-related administrative information 205 to 208 about active routing and filtering/screening rules from the network nodes 1 to 4. A plug-in mechanism is used to adapt to various systems.

The compiler function 512 of the network unit 5 uses the previously acquired routing-related administrative information 205 to 208 and various rules describing priorities to combine these data into a global (instant) routing plan. The various rules describing priorities may also be provided by the network nodes 1 and 4. It is also possible that these priority rules are retrieved from a dedicated routing-related node, e.g., a server administrating routing policy in the network 100. Specifically, the global (instant) routing plan will detail that all foreign customers' calls are routed via the network nodes 4 and 2 to the network 1 on coming Tuesday. The compiler function 512 generates a notification message that comprises at least elements of the collected routing-related administrative information, preferably the deduced global instant routing plan. The word "instant" expresses that the global routing plan is not fixed but is subject to change continuously.

The dispatcher function 513 of the network unit 5 sends this generated notification message 209 to the network node 1, as the node 1 represents the destination of the analysed routing process. The network node 1 represents an application, e.g., a telephone device, of the first user.

Generally, it is possible that notification messages are sent to one or more nodes involved in the routing if the nodes are associated with users who can decide on the routing plan or if the nodes are capable to decide whether a routing plan is suitable for a user or a terminal. Then the nodes and the applications are identical, as is the case in the presently described embodiment of the invention. However it is also possible that nodes and the applications are not identical, e.g., when the nodes are responsible for the routing of a communication to one or more separate applications. As an example of this latter case, imagine a node which is represented by a telephone switch, and an application which is a telephone set used by an end-user whereby the telephone set is connected to the telephone switch. In the latter case, the dispatcher function 513 sends the notification messages to the applications (telephone), not the nodes (switch), since only the users associated with the applications can decide on an approval or rejection of the routing plan. The word "application" is to express the fact that the application or a user associated with/using the application is able to assess (acknowledge/deny) the routing plan.

It is possible that dispatcher function 513 notifies the application if the application will be a destination for a certain type of communications, e.g., intra-enterprise communications, communications from outside the enterprise, communications from abroad, telephone calls, emails, IMs, etc. (IM = Instant Message).

The application, i.e., the node 1, receives the notification message 209 and presents it to the user of the application. Preferably, the user is presented the information that he is the destination for foreign customer's calls on next Tuesday. The feedback function 514 of the network unit 5 provides the user with a selection procedure so that the user then may select whether he accepts or rejects this routing plan. In our case, the user will not want to answer the calls from foreign customers and thus decides to reject this routing plan. Therefore, the user correspondingly selects an option in the selection procedure. For example, the user is provided by the feedback function 514 with an announcement on the telephone, and the user may speak "yes" or "no", indicating acceptance or rejection.

Preferably, the user is provided with an option to give reasons for his rejection so that the units which have to deal with the user's rejection have hints how to proceed further.

It is possible that the feedback function 514 notifies back the managers of the routing policy (the boss, the user's colleagues, the informal contact centre administrator, etc.) that the user agrees or disagrees with the routing rules. The notification and accept/reject answer can contain additional human readable information that explains why the policy/acceptance/rejection takes place. Here, the user's message, i.e., the spoken word "no" or a corresponding electronic message generated by pressing a button on the user's application, is sent 210 to the network unit 5 where the feedback function 514 generates a rejection message 211 to be sent to the authority 9.

The authority receives the rejection message 211 and responds to the rejection of the routing plan by the user. For example, the authority accesses 212, 213 the network nodes 2 and 4 to change the routing-related administrative information stored in the respective memories of the network nodes 2 and 4 in a way so that the first user is no longer the routing destination of foreign customers' calls.

## Claims

1. A method of supporting a routing of communications (601 to 604) among two or more nodes (1 to 4) of a telecommunications network (100), the routing of the communications (601 to 604) governed by routing-related administrative information defined for one or more of the nodes (1 to 4),
**characterised in**
**that** the method comprises the steps of:
collecting said routing-related administrative information provided from the one or more nodes (1 to 4);
generating notifications (209) based on said collected routing-related administrative information; and
sending said notifications (209) to one or more applications for informing said applications about the routing of the communications (601 to 604).

2. The method of claim 1,
**characterised in**
**that** the method further comprises the steps of:
providing said applications with a feedback function for allowing the applications to give feedback concerning the routing of the communications (601 to 604) to the telecommunications network (100); and
when receiving a feedback message (210) from an application, turning the respective feedback into a notification (211) towards an authority (9) of the telecommunications network (100).

3. The method of claim 1,
**characterised in**
**that** the method further comprises the steps of:
after notification (209) of one of the applications, providing the application with a selection procedure to accept or reject the routing of the communications (601 to 604) or to request more information;
if the application accepts the routing of the communications (601 to 604) in said selection procedure, maintaining the routing of the communications (601 to 604); and
if the application rejects the routing of the communications (601 to 604) in said selection procedure, triggering a re-assessment of the routing.

4. The method of claim 3,
**characterised in**
**that** the method further comprises the steps of:
if the application rejects the routing of the communications (601 to 604) in the selection procedure, identifying the one or more nodes (1, 2, 4) which are involved in the routing of the communications (601 to 604); and
sending a rejection notification to one or more of the identified nodes (1, 2, 4), the rejection notification informing the one or more of the identified nodes (1, 2, 4) about the rejection by the application.

5. The method of claim 4,
**characterised in**
**that** the method further comprises the steps of:
providing a user of the application with a possibility to input a reason for rejecting the routing of the communications (601 to 604);
appending the reason input by the user of the application to said rejection notification.

6. The method of claim 1,
**characterised in**
**that** the method further comprises the step of:
connecting to administrative Application Programming Interfaces of the one or more nodes (1 to 4);
subscribing to routing-related administrative information exchanged among the one or more nodes (1 to 4); and
whenever one of the one or more nodes (1 to 4) handles routing-related administrative information, acquiring said information.

7. The method of claim 1,
**characterised in**
**that** the method further comprises the steps of:
analysing said collected routing-related administrative information in connection with pre-defined rules describing routing priorities;
based on said analysis, combining said collected routing-related administrative information and said priority rules into a comprehensive routing plan; and
generating said notifications (209) in consideration of said comprehensive routing plan.

8. The method of claim 1,
**characterised in**
**that** the method further comprises the steps of:
providing the one or more applications with an option to subscribe to notifications (209) dependent on notification categories; and
sending only those notifications to the one or more applications for which the respective applications have subscribed to.

9. The method of claim 1,
**characterised in**
**that** the method further comprises the step of:
conveying with said notifications (209) additional information related to a business context of the communications.

10. A network unit (5) for supporting a routing of communications (601 to 604) among two or more nodes (1 to 4) of a telecommunications network (100), the routing of the communications (601 to 604) governed by routing-related administrative information defined for one or more of the nodes (1 to 4),
**characterised in**
**that** the network unit (5) comprises a control unit (50) adapted to collect said routing-related administrative information provided from the one or more nodes (1 to 4), generate notifications (209) based on said collected routing-related administrative information, and send said notifications (209) to one or more applications for informing said applications about the routing of the communications (601 to 604).
